# EUROPÄISCHE PATENTSCHRIFT

(11) **EP 3 129 159 B1**
(45) Veröffentlichungstag und Bekanntmachung des Hinweises auf die Patenterteilung: **25.12.2019**
(21) Anmeldenummer: 15716755.2
(22) Anmeldetag: 02.04.2015
(51) Int. Cl.: B29C 59/04, F15D 1/00, B05D 3/06, B64C 21/10, B29C 59/02, B05D 5/02, B05D 1/40

(54) **APPLIKATOR UND APPLIKATIONSVERFAHREN**
APPLICATOR AND APPLICATION METHOD
APPLICATEUR ET PROCÉDÉ D'APPLICATION

(30) Priorität: 09.04.2014 DE 202014101661 U; 26.09.2014 DE 202014104604 U
(43) Veröffentlichungstag der Anmeldung: 15.02.2017
(73) Patentinhaber: KUKA Systems GmbH, 86165 Augsburg (DE)
(72) Erfinder: STURM, Thomas, 85259 Wiedenzhausen (DE); HUBER, Helmut, 86574 Axtbrunn (DE)
(74) Vertreter: Ernicke, Klaus Stefan
(86) Internationale Anmeldenummer: PCT/EP2015/057347
(87) Internationale Veröffentlichungsnummer: WO 2015/155121

(56) Entgegenhaltungen:
- EP-A1- 2 650 922
- CN-A- 102 463 293
- DE-A1-102006 004 644
- US-A- 5 480 596
- US-A1- 2012 070 623

## Beschreibung

Die Erfindung betrifft einen Applikator und ein Applikationsverfahren für den Auftrag und die prägende Mikroprofilierung eines fluidischen Mediums im Non-Aerospace-Bereich.

Ein solcher Applikator ist aus der DE 10 2006 004 644 A1 bekannt. Der Applikator trägt einen aushärtbaren Lack auf einer Substratoberfläche auf und prägt ihn dabei auch an seiner Oberfläche, wodurch der Lack eine Mikrostruktur erhält. Ein solcher Lack mit Mikrostruktur wird auch als riblet bezeichnet. Der Applikator besitzt eine umlaufend bewegbare Matrize mit einem Prägeprofil und wird von einem Roboter gegen den Untergrund, insbesondere die sogenannte Substratoberfläche, angedrückt und an dieser entlangbewegt. Der Applikator hat eine mit Überdruck aufpumpbare Walze, auf deren Außenumfang die Matrize fest aufgezogen ist und durch den Gasdruck gespannt wird. In der Walze ist eine auf den Andrückbereich gerichtete Aushärteeinrichtung angeordnet.

Die US 5,480.596 A befasst sich mit der Herstellung eines bahnförmigen optischen Aufnahmemediums, wobei mit einem stationären Applikator eine unter Licht aushärtbare profilierte Harzschicht auf eine laufende biegeelastische Substratbahn mittels einer drehbaren Matrizenrolle aufgebracht und dabei rückseitig mit UV-Licht bestrahlt wird. Die Matrizenrolle hat eine Metallwelle mit einer aufgezogenen weichen Elastomerschicht und einer darauf befestigten Matrizenhülle, wobei die laufende Substratbahn über die Oberseite der Matrizenrolle geführt und mittels Spannrollen abgespannt wird, wobei sie in einem Bogen an den Rollenumfang angelegt wird.

Die US 2012/070623 A zeigt einen stationären Applikator mit einer hohlen Matrizenrolle, die einen starren Mantel und eine Lichtquelle im hohlen Innenraum aufweist. Die Matrizenrolle hat eine reine Prägefunktion für eine laufende und bereits anderweitig zuvor beschichtete Substratbahn.

Die CN 102463293 A offenbart eine ebenfalls stationäre Bedruckungseinrichtung, bei der laufende formstabile Substrate bedruckt werden, die mit gegenseitigem Abstand in Transportrichtung auf einem Transportband angeordnet sind. Die Bedruckung der vorbei bewegten Substrate erfolgt durch einen rotierende hohlen Zylinder mit einem hydraulischen oder pneumatischen Kissen am Umfang und einer darauf aufgezogenen Matrizenhülle.

Es ist Aufgabe der vorliegenden Erfindung, eine verbesserte Applikationstechnik aufzuzeigen.

Die Erfindung löst diese Aufgabe mit den Merkmalen im Verfahrens- und Vorrichtungshauptanspruch.

Die beanspruchte Applikationstechnik, d.h. der Applikator und das Applikationsverfahren sowie auch eine Applikationseinrichtung, haben verschiedene Vorteile. Mit der Applikationstechnik kann das fluidische Medium, z.B. ein aushärtbarer Lack, mit engeren Toleranzen für die Schichtdicke und für die durch Prägen geschaffene Mikrostruktur aufgebracht werden. Die Haltbarkeit des aufgebrachten Mediums und die technische bzw. physikalische Wirkung der Mikrostruktur können wesentlich verbessert werden. Eine solche Mikrostruktur auf einem Lack kann z.B. auf der Karosseriehaut bzw. Karosserieoberfläche eines Kraftfahrzeugs, z.B. eines Hochgeschwindigkeitszugs, aber auch eines Straßenfahrzeugs, eines Rennfahrzeugs oder dgl., für verringerte Luftwiderstände und für erhebliche Treibstoffeinsparungen sorgen. Gleiches gilt z.B. für einen Rumpf, eine Tragfläche oder andere wasserbenetzte Teile von Schiffen. Je exakter die Mikrostruktur definiert und gebildet werden kann, desto größer sind die erzielbaren Effekte.

Der Applikator mit dem hohlen Stützkörper erlaubt eine bessere und genauere Aufnahme und Führung der Matrize, wodurch der mit der Matrize bewirkte Auftrag des fluidischen Mediums verbessert wird. Insbesondere können exakte Randkanten des in Bahnen aufgelegten fluidischen Mediums gebildet werden. Dies sorgt für einen optimalen Anschluss benachbarter Auftragbahnen.

Der Applikator weist einen Anschluss für eine Handhabungseinrichtung, insbesondere für einen Industrieroboter, auf.

Mit einer entsprechenden Handhabungseinrichtung kann der Applikator mit der Matrize derart an den Untergrund angepasst werden, dass sich ein flächiger Andrückbereich ergibt.

Der beanspruchte Applikator sorgt außerdem im Andrückbereich der Matrize am Untergrund für einen gleichen Anpressdruck. Ein Herauspressen von Lack an den Matrizenrändern kann verhindert werden, wobei auch die besagten scharfen Kanten am Matrizenrand gebildet werden. Der Applikator erlaubt ferner eine wesentlich verbesserte Formanpassung der Matrize im Andrückbereich an die in vielen Fällen nicht ebene Kontur des Untergrunds. Insbesondere können konvexe und konkave Wölbungen des Untergrunds kompensiert und gleichmäßig mit dem geprägten Medium beschichtet werden. Solche Konturen kommen z.B. an Karosserieoberflächen, an Flügeln von Windrädern oder dgl. vor.

Bei dem beanspruchten Applikator hat die Matrize eine höhere Standzeit und Lebensdauer als beim Stand der Technik. Die Prägeprofilierung kann an der Außenseite des Matrizenmaterials angeordnet sein. Alternativ kann sie an einer dünnwandigen und biegeelastischen Beschichtung auf der Matrizenaußenseite angebracht sein. Eine solche Beschichtung, z.B. auch in Folienform, kann eine deutlich höhere Standzeit vermitteln und kann z.B. aus Glas oder einem anderen geeigneten Werkstoff bestehen. Dies führt ebenfalls zu einer erhöhten Lebensdauer der Matrize. Die Matrize kann ggf. auch aus einem dünnwandigen, biegeelastischen Glaskörper mit Prägeprofilierung bestehen. Die Matrize kann außerdem bei Bedarf gewechselt werden.

Die erfindungsgemäße Ausbildung des Applikators mit dem Stützkörper und dem im Zwischenraum angeordneten Andrückmittel ermöglicht eine exakte Führung und Positionierung der Matrize Außerdem erleichtert sie den Matrizenwechsel. Dieser kann insbesondere automatisiert werden.

Der Applikator weist eine integrierte Stabilisierungseinrichtung auf, die für eine Stabilisierung, insbesondere Verfestigung, des auf dem Untergrund aufgetragenen fluidischen Mediums und der eingeprägten Mikrostruktur sorgt. Die Stabilisierungseinrichtung kann insbesondere als Aushärteeinrichtung in unterschiedlichsten Varianten ausgebildet sein. Sie kann in oder an dem hohlen Stützkörper angeordnet sein und beaufschlagt das gerade aufgetragene Medium im Andrückbereich der Matrize.

In diesem Andrückbereich wirkt die Stabilisierungsvorrichtung mit einem emittierten Stabilisierungsmittel, z.B. mit UV-Licht, und härtet beispielsweise das aufgetragene Medium aus. Der flächige Andrückbereich kann dabei in seiner Größe, insbesondere in seiner Erstreckung in Prozess- oder Vorschubrichtung, auf das Stabilisierungs- bzw. Aushärteverhalten des Mediums angepasst werden. In diesem flächigen Andrückbereich wird die Matrize gegen den Untergrund und das aufgetragene Medium mitsamt ihrem Prägeprofil angedrückt. Beim Stabilisieren bzw. Aushärten wird dadurch die Mikrostruktur des aufgetragenen Mediums optimal gesichert und fixiert.

Der Stützkörper ist in der bevorzugten Ausführungsform drehbar gelagert und ist dabei an seinen Mantelbereich mit der Matrize drehschlüssig verbunden. Die drehschlüssige Verbindung kann über das Andrückmittel geschaffen werden, welches vorzugsweise als Druckmittelpolster ausgebildet ist. Die Andrückkraft kann über ein Stellmittel gesteuert oder geregelt werden. Sie kann einerseits an die Betriebserfordernisse und an die prozessgünstige Form der Andrückfläche angepasst werden. Andererseits kann sie deutlich verringert werden, um einen Matrizenwechsel zu erleichtern.

Die Matrize wird mit einem eigenen Antrieb am Applikator umlaufend angetrieben. Dies kann mittelbar über einen Antrieb des drehbaren Stützkörpers und dessen drehschlüssige Verbindung mit der Matrize erfolgen. Alternativ kann ein Direktantrieb der Matrize vorhanden sein. Durch den eigenen Antrieb kann die Umlaufbewegung der Matrize zusätzlich zu der durch den Applikatorvorschub bewirkten Abwälzbewegung der Matrize beeinflusst werden. Der Antrieb kann hierfür in geeigneter Weise gesteuert oder auch geregelt werden.

Das fluidische Medium wird der Matrize mittels einer Zuführeinrichtung zugeführt, die eine Auftragdüse und ggf. eine Verteilwalze zur Mediumübertragung auf die Matrize aufweist. Die Zufuhr und die Dosierung des Medienauftrags auf die Verteilwalze oder direkt auf die Matrize kann mittels einer stationärer Auftragdüsen oder mit einer bevorzugt einzelnen und mittels einer Fahrachse längs der Matrize reversierend verfahrbaren Auftragdüse erfolgen. Der Auftrag erfolgt hierbei vorzugsweise in einem Auftraghub und einem anschließenden Leerhub in Gegenrichtung. Hierbei wird das Medium in spiralförmigen Auftragstreifen auf der Verteilwalze oder der Matrize appliziert, die in Umfangsrichtung dicht oder ggf. mit geringfügiger Überlappung aneinander anschließen.

Diese Form der Auftragsverteilung und Dosierung des Mediums auf der Verteilwalze hat Vorteile, weil die Schicht- und Mediendicke in Längsrichtung der Verteilwalze und dementsprechend auch in Längsrichtung der Matrize gleichmäßig ist. Dies ist für die gleichmäßige Prägestruktur und den Riblet-Effekt am Werkstück von besonderem Vorteil. Die an den Stoßstellen der spiralförmigen Auftragstreifen eventuell in Umfangsrichtung auftretenden Medien- und Schichtverdickungen sind für den Medienauftrag am Werkstück unschädlich. Hierfür kommt es auf die gleichmäßige Schichtdicke in Längsrichtung der Matrize und in Querrichtung zur Auftragbahn auf dem Werkstück an. Mit der Fahrbahnauftragdüse können Überlappungsstellen in Matrizenlängsrichtung wie bei den stationären Sprühkegeln vermieden werden.

In den Unteransprüchen sind weitere vorteilhafte Ausgestaltungen der Erfindung angegeben.

Die Erfindung ist in den Zeichnungen beispielsweise und schematisch dargestellt. Im Einzelnen zeigen:
- Figur 1:: eine schematische Ansicht eines Landfahrzeugs mit einer Applikationseinrichtung und einem Applikator,
- Figur 2:: eine schematische Seitenansicht des Applikators,
- Figur 3 und 4:: Stirnansichten des Applikators gemäß Pfeilen III und IV von Figur 2,
- Figur 5:: einen Längsschnitt durch den Applikator von Figur 2,
- Figur 6:: ein abgebrochenes und vergrößertes Detail VI von Figur 5,
- Figur 7 bis 10:: Schemadarstellungen von Auftragbahnen eines fluidischen Mediums und Teilen des Applikators,
- Figur 11:: eine Variante des Applikators,
- Figur 12: bis 16: eine bevorzugte Ausführungsform des Applikators in verschiedenen Ansichten,
- Figur 17:: eine Variante des Applikators mit einer verfahrbaren Auftragdüse und
- Figur 18:: eine Variante der Handhabungseinrichtung für den Applikator.

Die Erfindung betrifft einen Applikator (2) und ein Applikationsverfahren. Die Erfindung betrifft ferner eine Applikationseinrichtung (1).
Die Erfindung bezieht sich auf Anwendungen in beliebigen technischen Bereichen mit Ausnahme des Aerospace-Bereichs. Diese Bereiche werden als Non-Aerospace-Bereiche bezeichnet. Derartige Non-Aerospace-Bereiche können z.B. Verkehrsmittel, insbesondere Land- oder Wasserfahrzeuge, z.B. Straßen- oder Schienenfahrzeuge oder Schiffe sein. Zu den Non-Aerospace-Bereichen zählen auch Flügel von Windrädern, Turbinen- oder Gebläseschaufeln oder dgl.. Außerdem können unbewegliche Gegenstände, insbesondere Gebäude oder andere Immobilien, zu den Non-Aerospace-Bereichen gehören. Dies kann z.B. windbelastete Wände bzw. Fassaden, insbesondere von Hochhäusern, betreffen.

Der Applikator (2) dient dazu, ein fluidisches Medium (6) auf einen Untergrund (5) aufzutragen und dabei das aufgetragene Medium (6) zu prägen, wodurch es an seiner freien Oberfläche ein Profil (7) erhält. Das Profil (7) ist vorzugsweise eine Mikrostruktur mit Erhebungen und Tälern, die eng tolerierte Maße haben können. Der Auftrag erfolgt vorzugsweise bahnförmig, wobei der Applikator (2) und der Untergrund (5) relativ zueinander bewegt werden. Dies wird mittels einer Handhabungseinrichtung (3) der Applikationseinrichtung (1) bewirkt.

Das fluidische Medium (6) kann in unterschiedlicher Weise ausgebildet sein. Es kann eine flüssige oder pastöse, ggf. auch schaumige, Konsistenz haben und kann aus unterschiedlichen Materialien bestehen. Im gezeigten Ausführungsbeispiel ist das fluidische Medium (6) als Lack ausgebildet, der aus einer oder mehreren Komponenten bestehen kann. Das fluidische Medium (6), insbesondere der Lack, kann entsprechend der DE 10 2006 004 644 A1 ausgebildet sein.

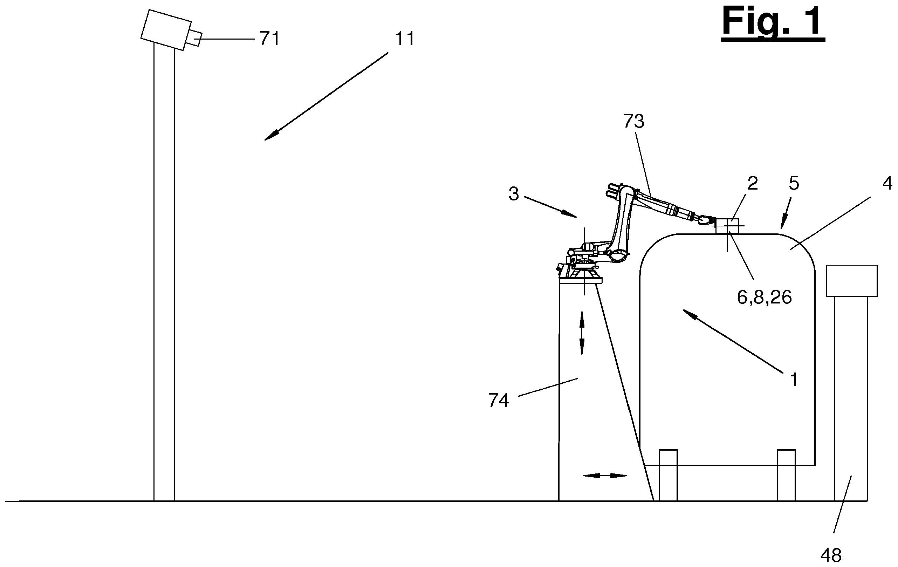

Das Werkstück (4) und der Untergrund (5) können ebenfalls in unterschiedlicher Weise ausgebildet sein. Im gezeigten Ausführungsbeispiel von Figur 1 ist das Werkstück (4) ein Verkehrsmittel, insbesondere ein Landfahrzeug. Der Untergrund (5) ist die Außenhaut des Verkehrsmittels (4). Diese kann eine ebene oder gewölbte Form haben. In den gezeigten Ausführungsbeispielen dienen der Applikator (2) und die Applikationseinrichtung (1) dazu, das Verkehrsmittel (4) an der Außenseite zu lackieren.

Das aufgetragene fluidische Medium (6) bedarf einer Stabilisierung. Dies kann eine Verfestigung sein, die z.B. durch Aushärten des Mediums (6) erreicht wird. Je nach Art des Mediums (6) und des Einsatzzweckes kann es andere Formen von Stabilisierung geben.

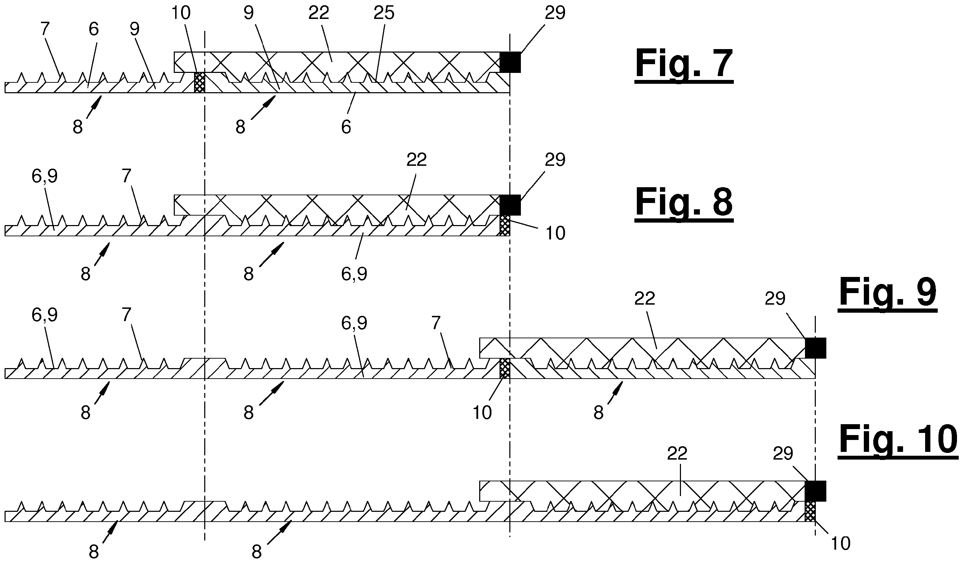

Die Mikrostruktur (7) auf der freien Medienoberfläche kann unterschiedlich ausgebildet sein und unterschiedlichen Zwecken dienen. Bei einem Verkehrsmittel (4), insbesondere einem Land- oder Wasserfahrzeug, ist eine Ausbildung in der Art einer Haifischhaut von Vorteil. In Figur 7 bis 10 ist eine solche Mikrostruktur (7) schematisch dargestellt. Die Erhebungen und Vertiefungen können sich profilartig längs der Auftragrichtung bzw. der Auftragbahn (8) erstrecken. Mit einer solchen Mikrostruktur (7) bzw. Riblet kann bei einem Verkehrsmittel (4) der Luftwiderstand und damit der Treibstoffverbrauch verringert werden.

Bei Wasserfahrzeugen lässt sich der Strömungswiderstand im Wasser reduzieren. Wände und Fassaden oder andere Teile von Hochhäusern oder dgl. können von einer Minderung der reibungsbedingten Windlast profitieren. Flügel oder Propeller von Windmaschinen, Turbinen- oder Ventilatorschaufeln oder dgl. können von den strömungs- und reibungsbedingten Verlusten entlastet werden. Die Verluste von Maschinen zur Umwandlung oder Erzeugung von Fluidkraft, insbesondere Wind oder Wasserkraft, können gemindert und die Wirkungsgrade der Strömungsmaschinen gesteigert werden.

Der Applikator (2) stellt in den gezeigten Ausführungsbeispielen ein Auftragwerkzeug für das fluidische Medium (6) dar. Zur Erzeugung der genannten Relativbewegung wird in den Ausführungsbeispielen der Applikator (2) von der Handhabungseinrichtung (3) relativ zu einem ortsfesten Werkstück (4) bewegt. Die in Figur 1 gezeigte Handhabungseinrichtung (3) besteht z.B. aus einem mehrachsigen Industrieroboter (73), der den Applikator (2) zum Medienauftrag hält und führt. Der Industrieroboter (73) kann eine beliebige Zahl und Anordnung von rotatorischen und/oder translatorischen Roboterachsen haben und besitzt eine Robotersteuerung (nicht dargestellt). Vorzugsweise ist der Industrieroboter (73) als Gelenkarmroboter oder Knickarmroboter mit fünf oder mehr Achsen ausgebildet.

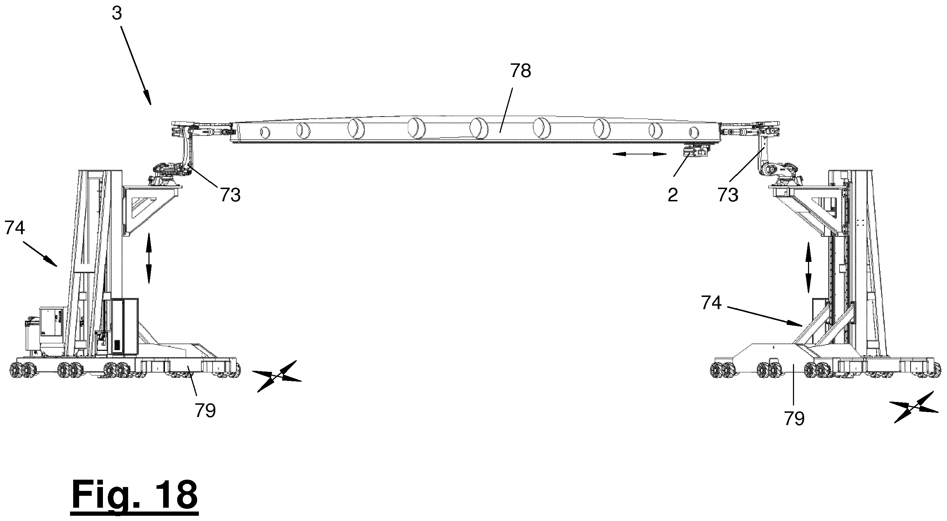

Der Industrieroboter (73) kann stationär angeordnet sein. Bei großvolumigen Werkstücken (4) kann der Industrieroboter (73) an oder auf einem Träger (74) in beliebiger, insbesondere hängender oder stehender Lage, angeordnet sein. Der Träger (74) kann beweglich sein, wobei er eine oder mehrere steuerbare Bewegungsachsen mit entsprechenden Antrieben aufweist, die in Figur 1 schematisch durch Pfeile dargestellt sind. Der Träger (74) kann z.B. eine auf dem Boden verfahrbare Hubbühne sein. Die Hubbühne kann ein omnidirektional auf dem Boden verfahrbares und auch drehbares Fördergerät (79) aufweisen, auf dem eine zumindest in der Höhe und ggf. auch in weiteren Achsen verstellbare Hubvorrichtung angeordnet ist. Ein solches Fördergerät (79) kann entsprechend der EP 2 137 053 B1 ausgebildet sein und mehrere Mecanumräder aufweisen. Es kann lenkbar sein und per Fernsteuerung verfahren werden. Alternativ kann es eigenständig einen vorprogrammierten Fahrweg abfahren und dabei zu Steuerungszwecken sowie zur Kollisionsvermeidung die aktuelle Fahrumgebung erfassen. Figur 18 zeigt eine konstruktive Ausführungsform des Trägers (74).

Der Träger (74) kann z.B. in den drei translatorischen Raumachsen beweglich sein. Er kann außerdem räumliche Drehachsen aufweisen. Ferner kann er gemeinsam und in abgestimmter Weise mit dem Industrieroboter (73) bewegt werden, wobei er z.B. an die besagte Robotersteuerung oder an eine andere übergeordnete Steuerung angeschlossen ist.

Die Applikationseinrichtung (1), die in den Ausführungsbeispielen eine Auftrageinrichtung bildet, kann eine Erfassungseinrichtung (11) aufweisen, die unterschiedlichen Zwecken dienen kann. Sie kann einerseits zur exakten Positionierung und Ausrichtung des Applikators (2) im Prozess dienen bzw. diese überwachen. Hierfür kann die Erfassungseinrichtung (11) z.B. die in Figur 1 gezeigte Messeinrichtung (71) aufweisen, die mit einer oder mehreren Messmarken (72), z.B. sog. 6D-Probes, am Applikator (2) zusammenwirkt und hierüber die Position und Ausrichtung des Applikators (2) im Raum während des Prozesses und während der besagten Relativbewegung erfasst. Die Messeinrichtung (71) kann z.B. eine digitale Messkamera oder einen Lasertracker oder eine andere geeignete Messeinheit aufweisen. Die Messeinrichtung (71) arbeitet bevorzugt berührungslos und optisch.

Der Industrieroboter (73) kann mit dem Applikator (2) über eine Wechselkupplung verbunden sein. Er kann dadurch bedarfsweise den Applikator (2) wechseln und einen anderen Applikator (2) oder ein anderes Werkzeug aufnehmen. Die Applikationseinrichtung (1) kann außerdem die in Figur 1 schematisch dargestellte Wechseleinrichtung (48) für eine Matrize (22) des Applikators (2) aufweisen, die im Arbeitsbereich des Industrieroboters (73) angeordnet ist und nachfolgend näher beschrieben wird.

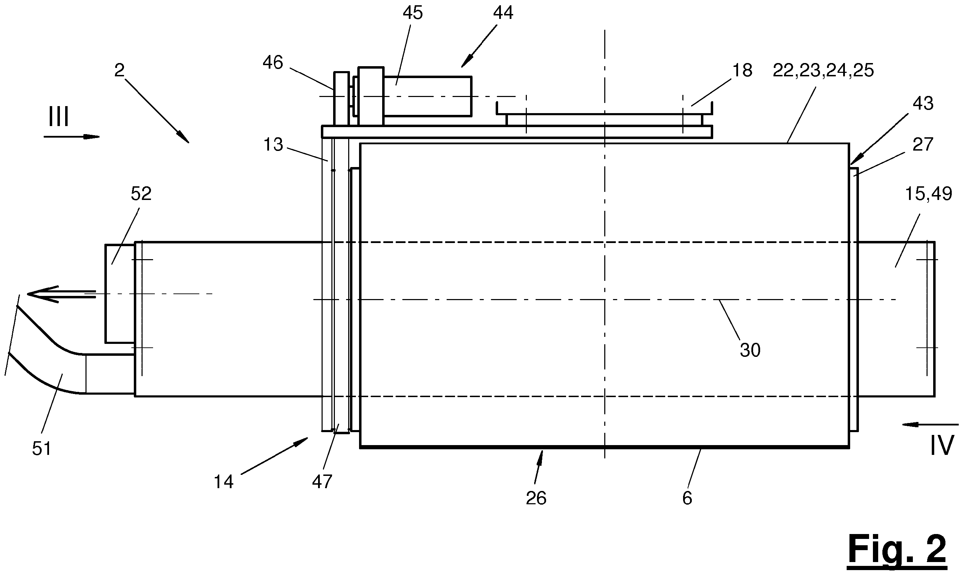

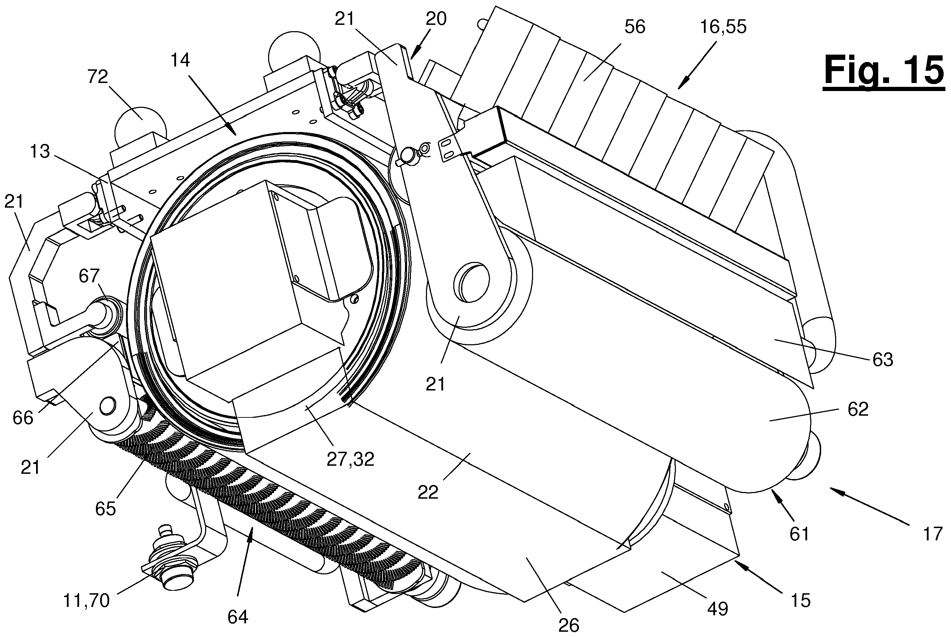

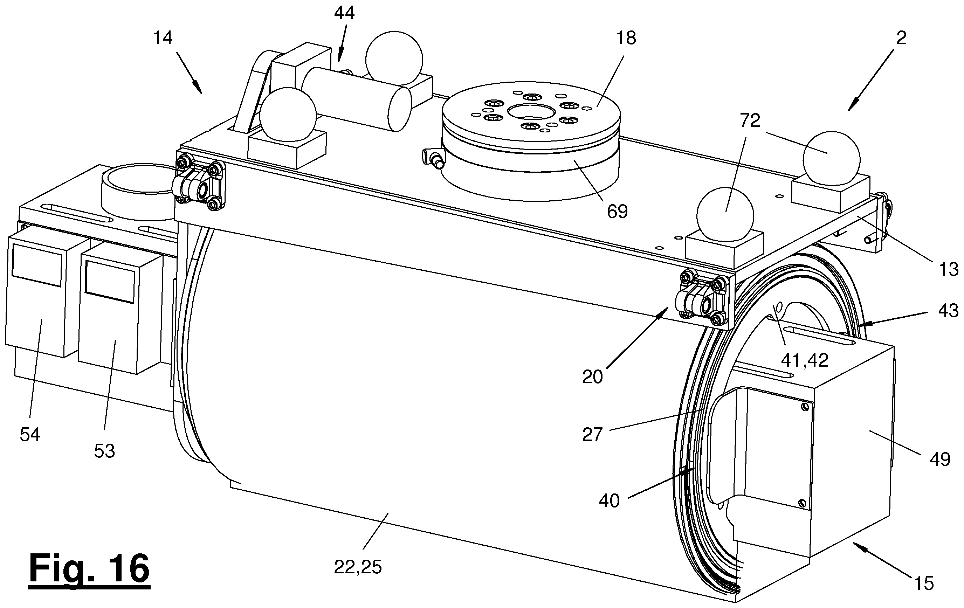

Eine erste bevorzugte Ausführungsform des Applikators (2) ist in Figur 2 bis 16 dargestellt. Der Applikator (2) weist eine Auftrageinrichtung (14) für das fluidische Medium (6) und eine Stabilisierungseinrichtung (15) für das Medium (6) auf, die z.B. als Aushärteeinrichtung ausgebildet ist. Der Applikator (2) kann ferner eine Zuführeinrichtung (16) für das fluidische Medium (6) und ggf. auch eine Reinigungseinrichtung (17) aufweisen.

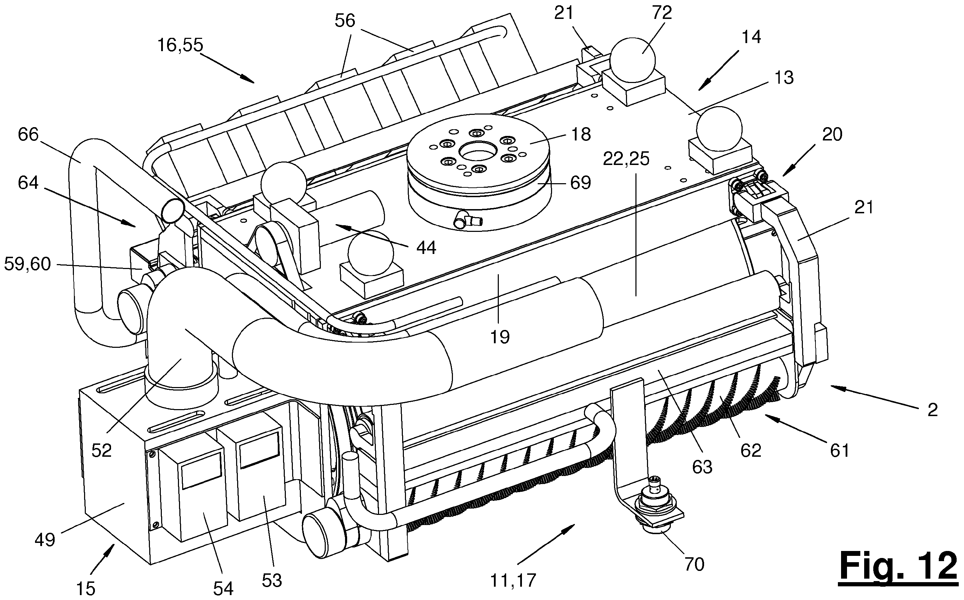

Der Applikator (2) besitzt ein Gestell (13), an dem ein Anschluss (18) für die Verbindung mit dem Abtriebselement der Handhabungseinrichtung (3), insbesondere des Industrieroboters (73) angeordnet ist. Das Gestell (13) kann als Gehäuse (19) ausgebildet sein oder ein solches schützendes Gehäuse aufweisen. Das Gestell (13) kann außerdem eine nachfolgend erläuterte und in Figur 12 bis 16 dargestellte Trageinrichtung (20) für Gerätekomponenten aufweisen, die einen Matrizenwechsel erleichtert und auch dessen Automatisierung erlaubt.

Der Applikator (2) weist eine umlaufend bewegte Matrize (22) auf, die an ihrer Außenseite (24) ein Prägeprofil (25) aufweist, mit dem das fluidische Medium (6) beim Auftrag auf dem Untergrund (5) mit einer Andrückkraft mechanisch geprägt wird und das Profil (7) bzw. die Mikrostruktur erhält. Die Matrize (22) ist als biegeelastische und endlose Ringbahn (23) ausgebildet. Sie ist dabei vorzugsweise zug- und dehnfest ausgebildet. Sie kann aus einem beliebig geeignetem Material, z.B. einem Kunststoff, insbesondere Silikon, bestehen. Bei einer dehnfesten Ausbildung kann das Prägeprofil (25) eine exakt vorgegebene und im Auftrage- und Prägeprozess beibehaltene Anordnung und Ausbildung haben. Bei weniger hohen Toleranzanforderungen kann die Matrize (22) eine gewisse Zug- und Dehnelastizität haben. Die geschlossene Ringbahn (23) kann die Form eines Rohres oder einer Hülse haben. In den gezeigten Ausführungsbeispielen ist dabei deren Querschnittsgeometrie in der Ausgangsstellung kreisrund. Alternativ sind andere Formgebungen möglich, auf die nachfolgend noch eingegangen wird.

Das Prägeprofil (25) kann direkt auf der Außenseite (24) der Matrize (22) bzw. der Ringbahn (23) angeordnet sein. Das Prägeprofil (25) kann dabei in beliebig geeigneter Weise in die Außenfläche (24) eingearbeitet sein. In einer anderen alternativen Ausführungsform kann die Matrize (22) an der Außenseite (24) eine Beschichtung aufweisen, die z.B. aus Glas oder einem anderen widerstandsfähigen Werkstoff besteht und die das besagte Prägeprofil (25) an ihrer eigenen Außenseite trägt.

Der Applikator (2), insbesondere dessen Auftrageinrichtung (14), weist ferner einen Stützkörper (27) auf, der innerhalb der Matrize (22) mit einem radialen oder quer gerichteten Abstand angeordnet ist. Die Matrize (22) umgibt den Stützkörper (27), wobei sie ihn vorzugsweise allseitig umschließt. Durch den besagten Abstand wird ein Zwischenraum (31) gebildet. Der Applikator (2), insbesondere die Auftrageinrichtung (14), weist ferner ein Andrückmittel (32) für die Matrize auf. Das Andrückmittel (32) ist im Zwischenraum (31) angeordnet und wirkt von innen auf die umgebende Matrize (22) und übt auf diese eine Andrückkraft aus.

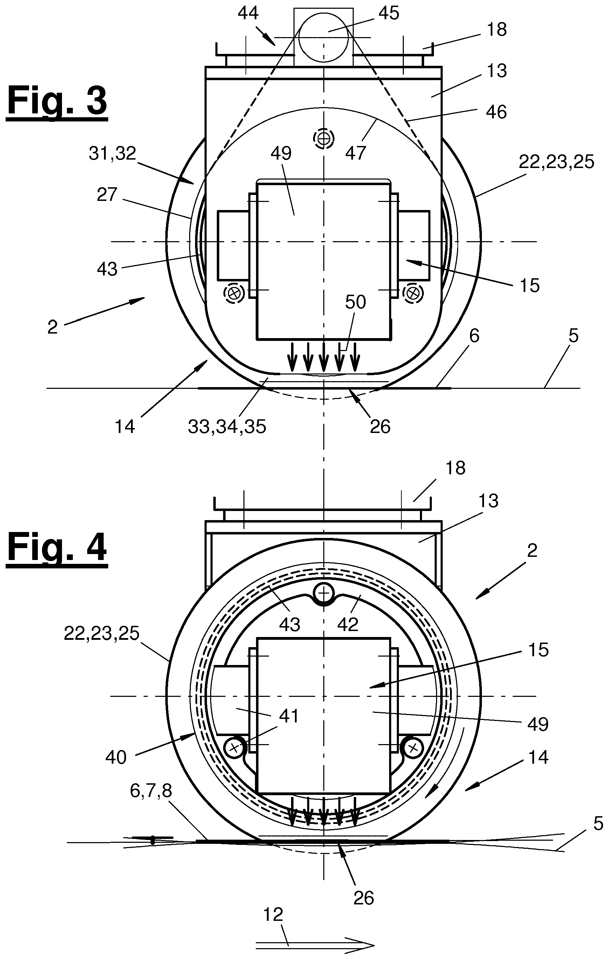

Beim Medienauftrag wird der Applikator (2) von der Handhabungseinrichtung (3), insbesondere von dem programmierbarem Industrieroboter (73) mit einer definierten und einstellbaren Kraft gegen den Untergrund (5) gedrückt. Hierbei kontaktiert die Matrize (22) mit ihrer Außenseite den Untergrund (5) und verformt sich durch die Zustell- oder Andrückkraft. Sie flacht sich dadurch im Kontaktbereich ab und bildet einen flächigen Andrückbereich (26). Dieser schmiegt sich eng an den evtl. konturierten Untergrund (5) an. Figur 3 und 4 zeigen diese Ausbildung.

Die umlaufend und insbesondere drehend um eine quer gerichtete Achse bewegte Matrize (22) nimmt mit dem Prägeprofil (25) das fluidische Medium (6) von einer Zuführeinrichtung (16) auf, bewegt es mit der Umlauf- oder Drehbewegung gemäß Pfeil in Figur 4 zum Untergrund (5) und überträgt es am Andrückbereich (26) auf den Untergrund (5), wobei auch das Profil (7) durch die Einwirkung der Zustell- oder Andrückkraft geprägt wird. Bei der besagten Relativbewegung mit der in Figur 4 durch einen Pfeil symbolisierten Prozessrichtung oder Vorschubrichtung wälzt die umlaufend bewegte Matrize (22) auf dem Untergrund (5) bei einem Vorschub ab. Im Andrückbereich (26) erfolgt auch die Stabilisierung des aufgetragenen und profilierten Mediums (6) mit der nachfolgend erläuterten Stabilisierungseinrichtung (15).

Die besagte Umlaufbewegung der Matrize (22) wird durch die Relativbewegung bzw. den Vorschub in Prozessrichtung (12) durch Reibkontakt und Abwälzen auf dem Untergrund (5) erzeugt. In der gezeigten und bevorzugten Ausführungsform weist der Applikator (2) zusätzlich einen eigenen Antrieb (44) für die umlaufende Bewegung der Matrize (22) auf. Der Antrieb (44) ist steuerbar oder regelbar und kann ebenfalls mit der besagten Steuerung, insbesondere der Robotersteuerung, verbunden sein. In den gezeigten Ausführungsformen ist der Stützkörper (27) am Gestell (13) des Manipulators (2) mit einer Lagerung (40) drehbar gelagert. Der Stützkörper (27) ist mit der Matrize (22) drehschlüssig verbunden. Die drehschlüssige Verbindung kann z.B. durch das nachfolgend näher erläuterte Andrückmittel (32) gebildet werden. In den gezeigten Ausführungsbeispielen ist der Antrieb (44) mit dem Stützkörper (27) gekoppelt, so dass die Matrize (22) mittelbar angetrieben und über den Drehschluss bei der Drehung des Stützkörpers (27) mitgenommen wird.

Wie Figur 2 bis 6 verdeutlichen, ist der Stützkörper (27) in den gezeigten Ausführungsformen rohrförmig ausgebildet und weist einen formstabilen Mantel (28) auf. Der Stützkörper (27) hat dabei vorzugsweise eine zylindrische Form mit einem kreisrunden Querschnitt, wobei er sich um eine gestellfeste zentrale Achse (30) dreht. Der formstabile Mantel (28) kann die vom Andrückmittel (32) ausgeübten Andrückkräfte auf die Matrize (22) abstützen.

Der Stützkörper (27) ist vorzugsweise hohl ausgebildet und hat die vorerwähnte bevorzugte Zylinder- oder Rohrform. Im Innenraum des hohlen Stützkörpers (27) wird die Stabilisierungseinrichtung (15) aufgenommen. Diese emittiert ein Stabilisierungsmittel (50) zum Andrückbereich (26) und zu dem dort gerade aufgetragenem fluidischen Medium (6). In den gezeigten Ausführungsbeispielen wird das als Lack ausgebildete Medium (6) ausgehärtet. Die Stabilisierungseinrichtung (15) weist hierfür eine Lichtquelle (49) auf, die z.B. als UV-Lampe ausgebildet ist. Das Stabilisierungsmittel (50) bzw. die durch Pfeile symbolisierten Lichtstrahlen durchdringen den Mantel (28) des Stützkörpers (27), den Zwischenraum (31) mit dem Andrückmittel (32) und die Matrize (22), die entsprechend lichtdurchlässig ausgebildet sind.

Das in Richtung zum Untergrund (5) emittierte Licht (50) wirkt vorzugsweise auf der gesamten oder zumindest auf einem Großteil der Andrückfläche (26) und härtet das zwischen Matrize (22) und Untergrund (5) befindliche fluidische Medium (6) aus. Durch die Andrückfläche (26) ergibt sich bei der Relativbewegung in Vorschubrichtung (12) eine Einwirkdauer des Stabilisierungsmittels (50), die für eine hinreichende Stabilisierung, insbesondere Verfestigung des Mediums (6) und des Profils bzw. der Mikrostruktur (7) sorgt. Die restliche Stabilisierung, insbesondere Verfestigung bzw. Aushärtung kann nach dem Medienauftrag an der Luft erfolgen.

Die Stabilisierungseinrichtung (15), insbesondere die Lichtquelle (49), kann in dem hohlen Stützkörper (27) angeordnet und aufgenommen sein. Sie kann dabei starr mit dem Gestell (13) verbunden sein. Sie kann aber auch an ein oder beiden Stirnenden des Stützkörpers (27) axial vorstehen. Die Stabilisierungseinrichtung (15), insbesondere die Lichtquelle (49), weist eine Energieversorgung (51) auf. Sie kann auch eine Entsorgung (52) für Schadstoffe haben, z.B. für das beim Aushärten entstehende Ozon. Die Entsorgung (52) kann z.B. eine Absaugung beinhalten. Die Energieversorgung (51) und die Entsorgung (52) können mit entsprechenden Zusatzeinrichtungen am Industrieroboter (73) oder an anderer Stelle verbunden sein. Zur Steuerung der Stabilisierungseinrichtung (15), insbesondere der Lichtquelle (49), können verschiedene Mess- und Steuergeräte vorhanden sein. Beispielsweise sind ein Feuchtemesser (53), insbesondere ein Hygrometer, und ein Thermometer (54) vorhanden. Sie sind bei der in Figur 12 bis 16 dargestellten konstruktiven Ausführungsform des Applikators (2) dargestellt.

Das Andrückmittel (32) kann in unterschiedlicher Weise ausgebildet sein. Es ist in dem z.B. ringförmigen Zwischenraum (31) zwischen dem Mantel (28) des Stützkörpers (27) und der Matrize (22) bzw. der Ringbahn (23) angeordnet. In den gezeigten Ausführungsbeispielen ist das Andrückmittel (32) als verformbares und den Zwischenraum (31) ausfüllendes Druckmittelpolster (33) ausgebildet. Das Druckmittelpolster (33) kann in unterschiedlicher Weise ausgebildet sein. In den gezeigten Ausführungsbeispielen weist es ein fluidisches Druckmedium (35) in einer dichtenden und biegeelastischen Umhüllung (34) auf. Das Druckmedium (35) ist z.B. ein Druckgas, insbesondere Druckluft. Der Innendruck im Druckmittelpolster (33) ist dabei signifikant höher als der Umgebungsdruck, so dass das Druckmittelpolster (33) von innen eine Andrückkraft gegen die umgebende Matrize (22) entwickelt.

Das Druckmittelpolster (33) ist mit dem Stützkörper (27) und mit der Matrize (22) drehfest verbunden. Hierüber wird die Antriebs- und Drehbewegung des Antriebs (44) vom Stützkörper (27) über das Druckmittelpolster (33) auf die Matrize (22) übertragen. Die drehfeste Verbindung zwischen Druckmittelpolster (33) und umgebender Matrize (22) erfolgt durch Reibung und Kraftschluss. Alternativ oder zusätzlich kann durch eine entsprechende Konturierung der Kontaktflächen auch Formschluss bestehen. Die drehfeste Verbindung wird insbesondere über die Umhüllung (34) des Druckmittelpolsters (33) geschaffen.

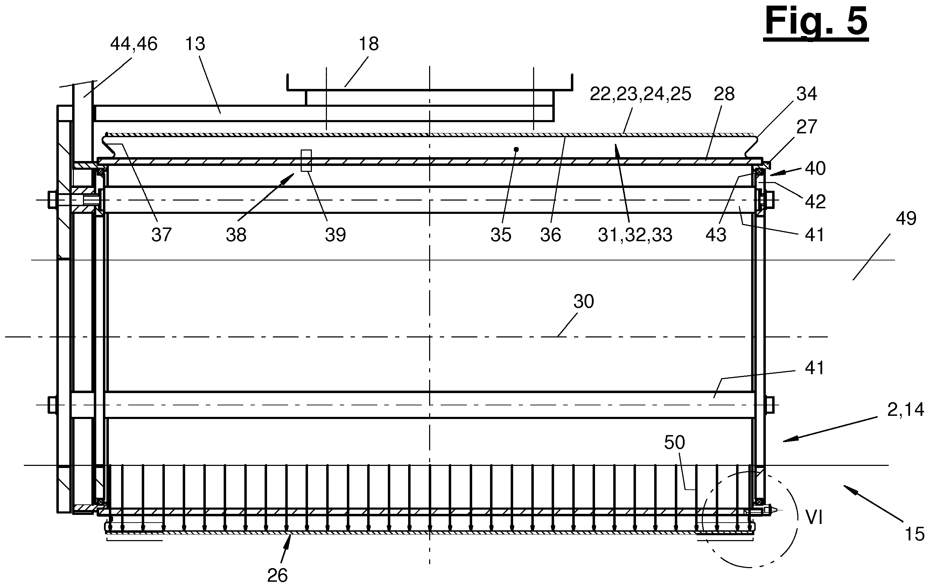

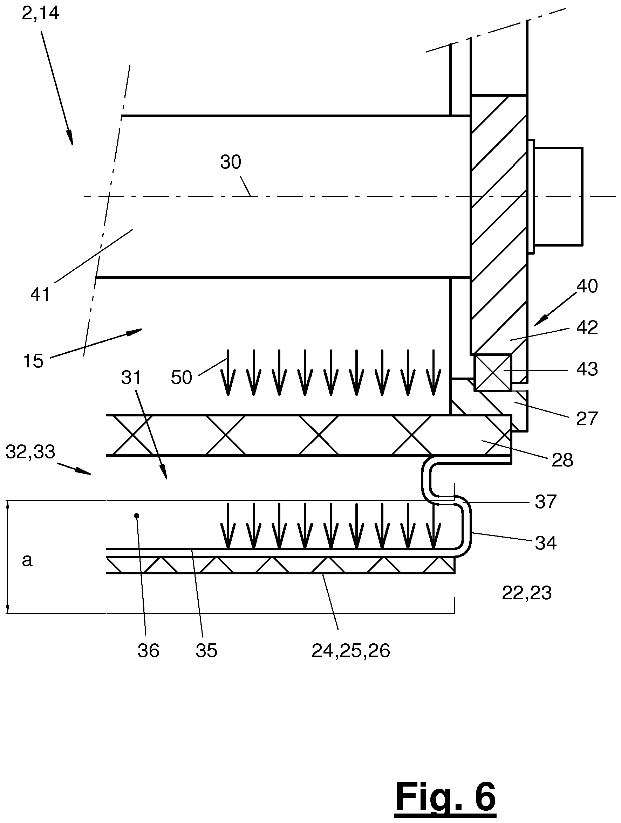

Wie Figur 5 und 6 in der Detaildarstellung verdeutlichen, ist die Umhüllung (34) schlauchförmig ausgebildet. Sie besteht aus einem geeigneten biegeelastischen Material, z.B. einer Kunststofffolie. Die Umhüllung (34) ist außerdem zug- und dehnelastisch. Die Biegesteifigkeit und z.B. die Wandstärke der Matrize (22) bzw. der Ringbahn (23) ist dabei höher als die Biegesteifigkeit der Umhüllung (34).

Die Umhüllung (34) besteht z.B. aus einem ringförmigen Zuschnitt, dessen Ränder umgeklappt und mit dem Mantel (28) des Stützkörpers (27) fest und dicht verbunden, z.B. verklebt sind. Die schlauchartige Umhüllung (34) erhält dadurch einen in der Ausgangsform zylindrischen Hüllenmantel (36), der den Umfang der Umhüllung (34) bildet. Ferner sind Seitenwände (37) vorhanden, die eine verformungsgünstige Ausbildung haben. Sie sind z.B. in der in Figur 6 gezeigten Weise Z- oder S-förmig gebogen. Alternativ oder zusätzlich kann eine entsprechende Materialausbildung im Seitenwandbereich vorhanden sein.

Die Umhüllung (34) und insbesondere der Hüllenmantel (36) kann sich dadurch im Andrückbereich (26) verformen und an den formsteifen Mantel (28) des Stützkörpers (27) annähern. Unter dem Innendruck des Druckmediums (35), z.B. Druckluft, verformt sich die Umhüllung (34) anschließend wieder nach Außen. Hierdurch ergibt sich der in Figur 6 dargestellte Arbeitsbereich (a). Der Arbeitsbereich und die dadurch mitbestimmte Breite des flächigen Andrückbereichs (26) in Vorschubrichtung (12) kann über die von der Handhabungseinrichtung (3) ausgeübte Zustellung und Anpressung des Applikators (2) und der Matrize (22) an den Untergrund (5) eingestellt und ggf. gesteuert oder geregelt werden. Dies kann auch in Abhängigkeit von der benötigten Einwirkzeit des Stabilisierungsmittels (50), z.B. des UV-Lichts, erfolgen.

Figur 3 bis 6 verdeutlichen die Lagerung (40) des walzenartigen Stützkörpers (27) am Gestell (13). Hierfür ist im Innenraum des hohlen Stützkörpers (27) eine Stützkonstruktion (41) angeordnet, die mit dem Gestell (13) starr verbunden und dort abgestützt ist. An der Stützkonstruktion (41) sind Lagerflansche (42) befestigt, die an den stirnseitigen Randbereichen des Stützkörpers (27) angeordnet sind und die außenseitig ein Lager (43), z.B. ein flaches Ringlager, tragen. Dieses ist seinerseits mit dem Stützkörper (27) verbunden. An der Stützkonstruktion (41) kann außerdem die Stabilisierungseinrichtung (15), insbesondere die Lichtquelle (49) befestigt und fest oder verstellbar positioniert sein.

Der vorerwähnte Antrieb (44) ist am Gestell (13) angeordnet. Er weist einen Motor (45), z.B. einen Elektromotor, und einen Riementrieb (46) oder ein anderes geeignetes Übertragungsmittel auf, welches das Motorritzel mit einem Treibmittel (47) am Stützkörper (27) verbindet. Das Treibmittel (47) kann z.B. von einem Zahnkranz am Außenumfang des zumindest in diesem Bereich zylindrischen Stützkörpers (27) gebildet werden und ist bevorzugt am hinteren Randbereich des Stützkörpers (27) angeordnet.

Das Andrückmittel (32) kann in seiner expansiven Kraftwirkung gesteuert oder auch geregelt werden. Es weist hierfür ein geeignetes Steuermittel (38) auf, welches in Figur 5 angedeutet ist. Bei der gezeigten Ausbildung des Andrückmittels (32) mit einem Druckmittelpolster (33) kann das Steuermittel (38) ein steuerbares Ventil (39) und eine Druckmedienversorgung (nicht dargestellt) umfassen. Hierüber kann das Druckmedium (35), insbesondere ein Druckgas, zugeführt oder abgelassen werden. Durch Zufuhr wird der Innendruck in der gewünschten Weise erhöht. Ein fluidisches, insbesondere gasförmiges Druckmedium (35) hat dabei den Vorteil, dass im Andrückbereich (26) ein konstanter Druck und eine hieraus entstehende konstante Andrückkraft bestehen. Falls die Matrize (22) bzw. das Prägeprofil (25) verschlissen sind, kann die Matrize (22) ausgetauscht werden. Hierfür wird z.B. Druckmedium (35) abgelassen und der Innendruck des Druckmittelpolsters (33) verringert, so dass an der vorerwähnten Wechseleinrichtung (48) die Matrize (22) abgezogen und eine neue Matrize (22) aufgezogen und aufgesteckt werden kann.

Figur 7 bis 10 verdeutlichen den Medienauftrag in mehreren Schritten und in abgebrochenen Schnittdarstellungen. Die Auftragbahnen (8) werden exakt parallel und mit einem definierten Abstand nebeneinander auf dem Untergrund (5) platziert. Die Auftragbahnen (8) können dabei über ihre Breite beim Auftrag vollständig oder teilweise stabilisiert werden. Figur 7 bis 8 verdeutlichen außerdem den Fall, dass die Breite der Matrize (22) größer als die Breite der Auftragbahn (8) sein kann, wobei sich auch das Prägeprofil (25) nur über einen Teilbereich der Matrizenbreite erstreckt. An einem Randbereich der Matrize (22) kann eine Sperre (29) umlaufend angeordnet sein, die den Durchtritt des Stabilisierungsmittels (50), insbesondere des UV-Lichts, verhindert. Auf der gegenüberliegenden Seite kann die Matrize (22) über das Prägeprofil (25) und den Auftragbereich seitlich hinaus stehen. Im Bereich der Sperre (29) wird das fluidische Medium (6) von der Matrize (22) mitgenommen und auf dem Untergrund aufgetragen, wobei es aber beim Auftrag nicht stabilisiert wird. Es entsteht hierdurch der in den Zeichnungen dargestellte unverfestigte Bereich (10), der auch als Nassbereich bezeichnet wird. In den anderen Bereichen kann das aufgetragene fluidische Medium (6) stabilisiert und insbesondere ausgehärtet werden, wobei hier der in den Zeichnungen dargestellte verfestigte Strukturbereich (9) entsteht. Der unverfestigte Bereich (10) wird bei Applizierung der benachbarten Auftragbahn (8) stabilisiert und verfestigt bzw. ausgehärtet. Dies geschieht durch den der Sperre (29) axial gegenüberliegenden und über das Prägeprofil (25) seitlich hinausstehendem Matrizenrand und dem dortigen Durchtritt des Stabilisierungsmittels (50). Zugleich wird bei der nächsten Auftragbahn (8) wieder ein unverfestigter Bereich (10) gebildet. Bei der nachträglichen Verfestigung geht dieser Bereich (10) eine innige Verbindung mit den anderen zuvor verfestigten Strukturbereichen (9) ein. Die aneinander grenzenden Randbereiche der Auftragbahnen (8) sind in Figur 7 bis 10 als Erhebungen ausgebildet. Alternativ können hier Vertiefungen sein.

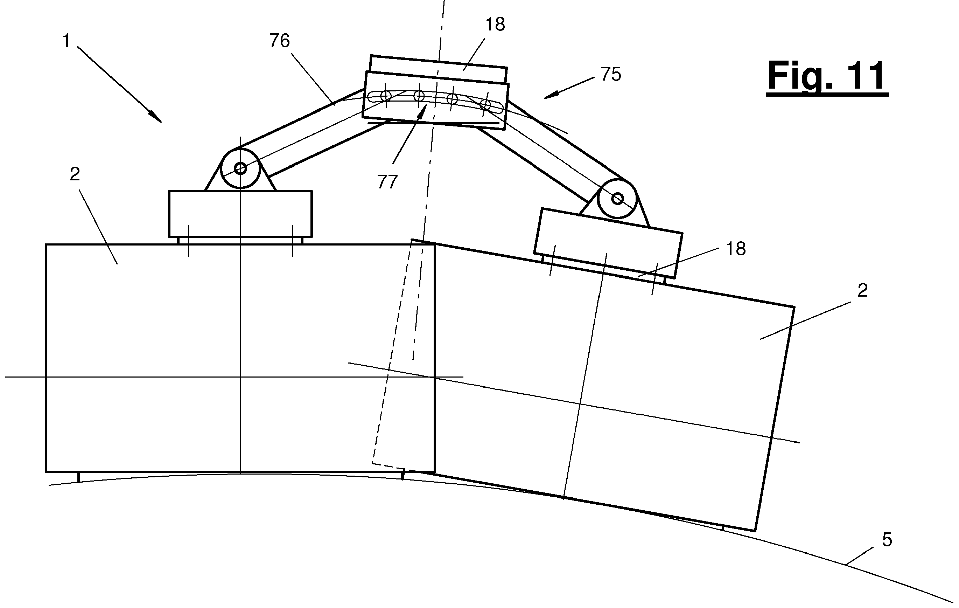

Figur 11 zeigt eine Variante der Applikationseinrichtung (1). Hier sind zwei oder mehr Applikatoren (2) in Vorschubrichtung mit Versatz nebeneinander und hintereinander angeordnet. Sie befinden sich an einem gemeinsamen Halter (75), der mit der Handhabungseinrichtung (3), insbesondere dem Industrieroboter (73) durch einen Anschluss (18) verbunden ist. Der Halter (75) weist zwei oder mehr Halterarme (76) auf, die an den Enden mittels gelenkiger Anschlüsse oder dergleichen mit den Anschlüssen (18) der Applikatoren (2) verbunden sind. Die Relativstellung der Applikatoren (2) kann durch eine Stelleinrichtung (77) am Halter (75) verändert werden. Hierdurch können Neigung und ggf. auch Abstand der Halterarme (76) gezielt eingestellt und bedarfsweise verändert werden.

In Figur 12 bis 16 ist eine konstruktive Ausführungsform des Applikators (2) dargestellt. Dieser ist entsprechend der vorbeschriebenen Ausführungsbeispiele von Figur 2 bis 6 ausgebildet. In den konstruktiven Ausführungsformen sind zusätzlich die Zuführeinrichtung (16) und die Reinigungseinrichtung (17) ersichtlich.

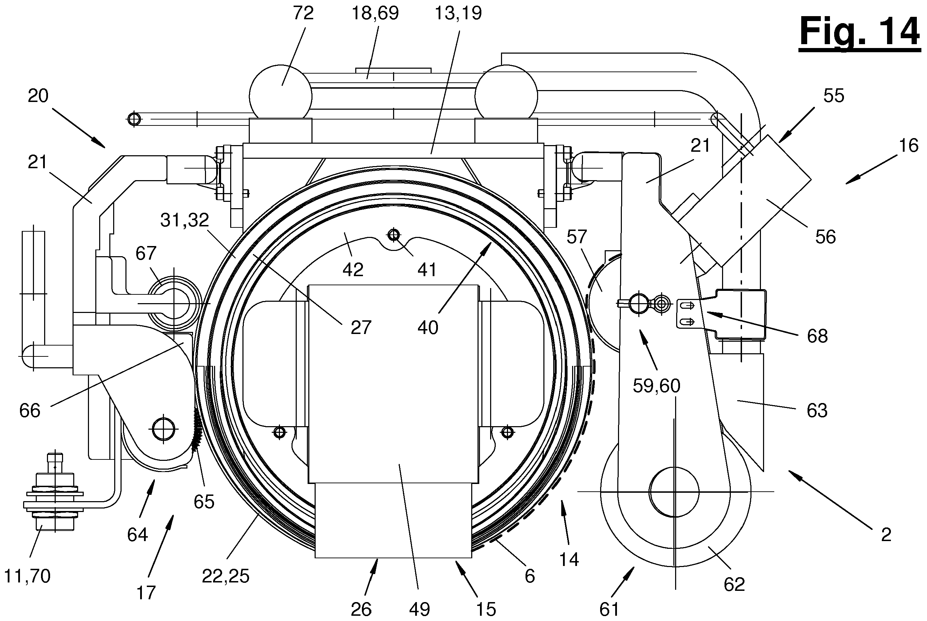

Die Zuführeinrichtung (16) ist mit einer externen Medienversorgung (nicht dargestellt) verbunden oder kann einen mitgeführten Vorratsbehälter aufweisen. Sie besitzt eine Dosiereinrichtung (55) für den Medienauftrag. Hierfür sind z.B. mehrere längs der Achse (30) aufgereihte Auftragdüsen (56) vorgesehen, die gesteuert oder geregelt eine Fluidmenge abgeben. Die Fluidübertragung an die Matrize (22) kann über eine Verteilwalze (57) erfolgen, die zwischen den Auftragdüsen (56) und der Matrize (22) angeordnet ist, und die mit einem steuerbaren oder ggf. regelbaren Antrieb (58) versehen ist, welcher seinerseits mit der vorerwähnten Steuerung, insbesondere Robotersteuerung, verbunden sein kann. Figur 14 zeigt die Anordnung und verdeutlicht schematisch die Übergabe des fluidischen Mediums (6) an die Matrize (22) und deren Prägeprofil (25).

Die Zuführeinrichtung (16) kann ferner eine Entsorgungseinrichtung (59) für Medienrückstände aufweisen. Diese weist z.B. einen Schaber oder ein anderes geeignetes Abtragsmittel auf, um Medienrückstände vom Mantel der Verteilwalze (57) abzulösen und in einem Behälter oder dergleichen aufzufangen. Die Entsorgungseinrichtung (59) kann ferner eine Absaugung (60) oder ein anderes Mittel zum Abtransport der Medienrückstände aufweisen. Die Entsorgungungseinrichtung (59) kann ferner einen separaten Medienbehälter aufweisen, in dem in Prozesspausen Medium (6) abgegeben werden kann, um ein vorzeitiges Aushärten im Zuführbereich zu vermeiden.

Die Reinigungseinrichtung (17) kann mehrteilig ausgebildet sein. Sie weist z.B. ein Reinigungsmittel (61) für den Untergrund (5) auf. Dieses besteht z.B. aus einer rotierend gelagerten Büste (62), die ggf. mit einem eigenen Antrieb steuer- oder regelbar angetrieben wird. Der Bürste (62) kann eine Entsorgung (63) zugeordnet sein, die z.B. als Absaugung für die aufgenommenen Schmutzpartikel oder dergleichen ausgebildet ist. Das Reinigungsmittel (61) für den Untergrund kann in Vorschubrichtung (12) vor der Matrize (22) und unterhalb der Zuführeinrichtung (16) angeordnet sein.

Die Reinigungseinrichtung (17) kann ferner ein Reinigungsmittel (64) für die Matrize (22) aufweisen. Dieses kann an der in Vorschubrichtung (12) hinteren Applikatorseite angeordnet sein. Es weist z.B. eine gegen die Außenseite (24) der Matrize (22) angestellte walzenförmige Bürste (65) auf, die ebenfalls rotierend und ggf. steuer- oder regelbar angetrieben ist. Der Bürste (65) kann eine Entsorgung (66) für die von der Matrize (22) abgelösten Medienrückstände zugeordnet sein, die z.B. als Absaugung ausgebildet ist. Ferner kann oberhalb der Bürste (65) eine elektrostatische Rolle (67) oder eine Adhäsionsrolle angeordnet und gegen die Matrize (22) außenseitig angestellt sein, welche weitere und evtl. noch anheftende Medienpartikel abnimmt und ggf. mit der Entsorgung (66) verbunden ist.

Die Reinigungseinrichtung (17) kann ferner ein Reinigungsmittel (68) für die Medienzuführung (16) aufweisen. Dies kann die vorgenannte Entsorgungseinrichtung (59) oder eine andere Einrichtung sein.

Figur 12 bis 16 verdeutlichen außerdem weitere Bestandteile der Erfassungseinrichtung (11). Diese weist z.B. einen Belastungssensor (69) zur Erfassung der beim Medienauftrag wirkenden Zustell- und Andrückkraft auf. Der Belastungssensor (69) kann z.B. am Anschluss (18) oder an einer anderen geeigneten Stelle, ggf. auch am Industrieroboter (73), angeordnet sein. Er kann als Kraft/Momentensensor ausgebildet sein. Der Belastungssensor (69) ist mit der Steuerung, insbesondere Robotersteuerung, verbunden.

Die Erfassungseinrichtung (11) kann ferner einen Prüfsensor (70) aufweisen, der z.B. zur Qualitätsprüfung des aufgetragenen fluidischen Mediums (6) und ggf. auch zur Qualitätsprüfung der Mikrostruktur (7) eingesetzt wird. Er kann in Vorschubrichtung (12) an der Applikatorrückseite angeordnet sein und mit dem Gestell (13) in geeigneter Weise verbunden sein. Der Sensor (70) ist z.B. als optischer Sensor, als Näherungsensor oder in anderer geeigneter Weise ausgebildet. Die Erfassungseinrichtung (11) kann darüber hinaus einen oder mehrere weitere Sensoren für Betriebszustände oder dergleichen der Auftrageinrichtung (1) und ihrer Komponenten aufweisen.

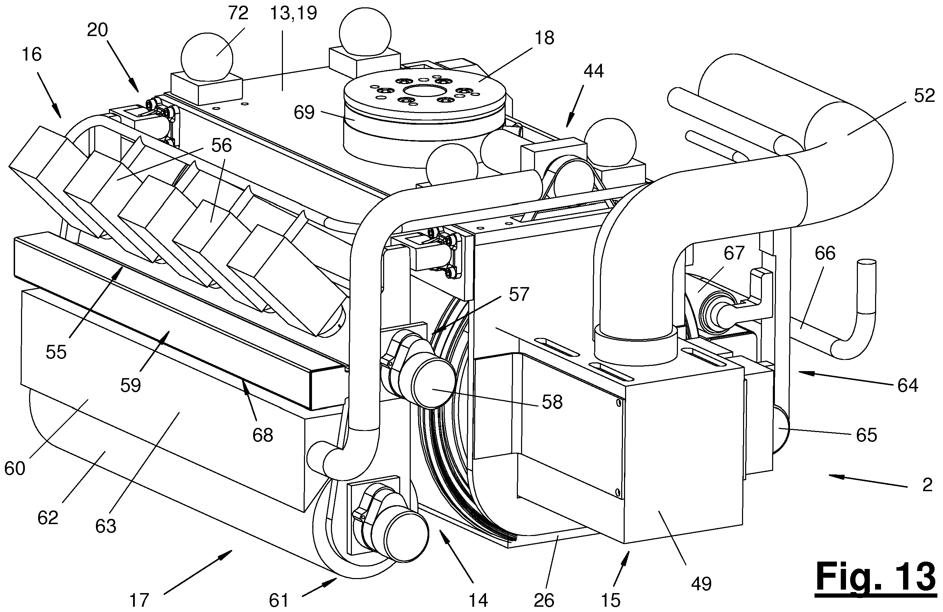

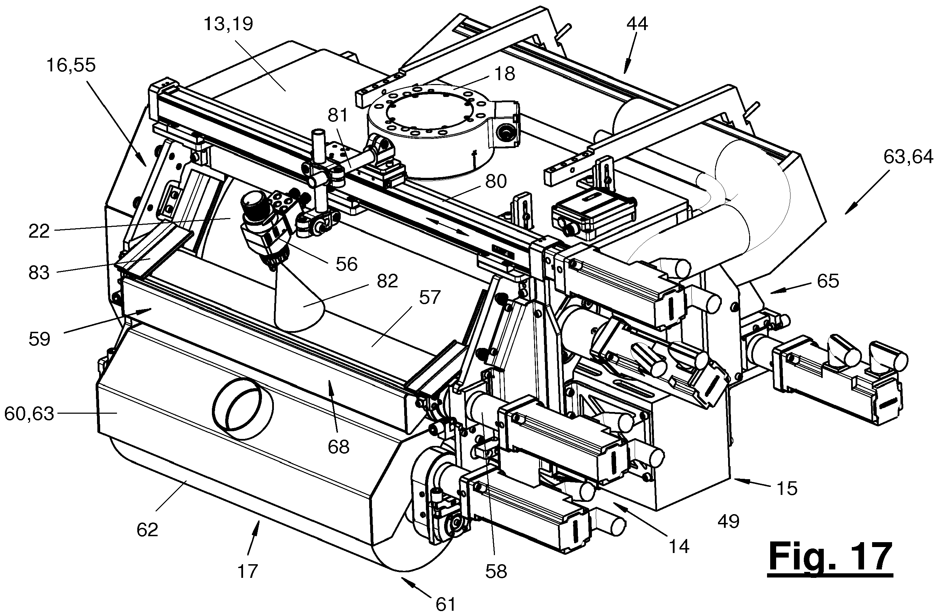

In Figur 17 ist eine weitere bevorzugte Ausführungsform des Applikators 2 dargestellt. Sie stimmt weitgehend mit der ersten Variante von Figur 2 bis 16 überein und unterscheidet sich hiervon durch die Gestaltung der Zuführeinrichtung (16) und insbesondere der Dosiereinrichtung (55) für das Medium (6). Figur 17 zeigt dabei eine ähnliche perspektivische Ansicht des Applikators (2) wie Figur 13.

Die Dosiereinrichtung (55) weist bei der zweiten Variante von Figur 17 eine vorzugsweise einzelne Auftragdüse (56) auf, die mittels einer Fahrachse (80) reversierend in den Pfeilrichtungen beweglich ist. Die vorzugsweise lineare Fahrachse (80) ist entlang der Längsachse bzw. Umlaufbewegungsachse der Matrize (22) ausgerichtet. Die Ausrichtung ist dabei auch entlang der Achse (30) des Stützkörpers (27) oder der Längsachse der Verteilwalze (57). Die Auftragdüse (56) ist mittels eines justierbaren Düsenhalters (81) an der Fahrachse (80) befestigt. Die Fahrachse oder Linearachse (80) ist z.B. als reversierender oder oszillierender Linearantrieb ausgebildet. Die Fahrachse (80) ist steuerbar oder regelbar und kann z.B. einen elektromotorischen Riementrieb oder Spindeltrieb, einen elektromagnetischen Linearantrieb, einen Zylinder oder dgl. aufweisen.

Die verfahrbare Auftragdüse (56) emittiert einen Sprühkegel (82) auf den Mantel der Verteilwalze (57), die wie im ersten Ausführungsbeispiel von einem steuerbaren oder regelbaren Antrieb (58) rotierend bewegt wird. An den Stirnenden der Verteilwalze (57) können Abschirmbleche (83) angeordnet sein.

Die verfahrbare Auftragdüse (56) sorgt für einen gleichmäßigen und dosierten Medienauftrag auf der drehenden Verteilwalze (57). Hierbei wird vorzugsweise stets nur in einer Fahrtrichtung beim Auftraghub der Fahrachse (80) ein Sprühkegel (82) emittiert, wobei die Medienemission bei der Rückfahrt im sog. Leerhub abgeschaltet ist. Während des Leerhubs dreht die Verteilwalze (57) weiter, so dass beim erneuten Auftraghub der Auftragdüse (56) der nächste spiralförmige Auftragstreifen des Mediums (6) dicht an den vorherigen Auftragstreifen auf dem Walzenmantel anschließt. Die Fahrbewegungen der Linearachse (80) sind dementsprechend an die Drehbewegungen der Verteilwalze (57) angepasst. Die Auftragstreifen können in Walzenumfangsrichtung gesehen mit dichtem Stoß oder ggf. auch mit geringfügiger Überlappung appliziert werden. Die Verteilwalze (57) überträgt dann das fluidische Medium (6) an die Matrize (22) .

In Abwandlung der gezeigten Ausführungsformen mit der Verteilwalze (57) kann der Medienauftrag von der stationären Reihenanordnung der Auftragdüsen (56) und/oder von der reversierend bewegten Auftragdüse (56) direkt auf die umlaufend bewegte Matrize (22) erfolgen.

In einer in Figur 18 dargestellten Variante kann die Handhabungseinrichtung (3) zwei oder mehr am Boden verfahrbare Träger (74) mit jeweils einem omnidirektional verfahrbaren Fördergerät (79) und einem Industrieroboter (73) aufweisen, wobei die Industrieroboter (73) einen Tragbalken (78) an beiden Enden halten und ihn in Kooperation gemeinsam sowie in abgestimmten Bewegungen relativ zum Werkstück (4) führen. Der Applikator (2) ist dabei am Tragbalken (78) verfahrbar gelagert und ggf. gesteuert angetrieben, wobei er eine Vorschubbewegung zum vorbeschriebenen Bahnauftrag des fluidischen Mediums (6) ausführt.

Abwandlungen der gezeigten und beschriebenen Ausführungsformen sind in verschiedener Weise möglich, insbesondere können die Merkmale der beschriebenen Ausführungsbeispiele und der genannten Abwandlungen beliebig miteinander kombiniert und ggf. auch ausgetauscht werden.

In einer nicht dargestellten Variante kann der Stützkörper stationär angeordnet und am Gestell (13) gehalten sein, wobei die Matrize (22) umlaufend in der Art einer Panzerkette um den Stützkörper umlaufend herumbewegt wird. Der Antrieb (44) kann auch direkt auf die Matrize (22) einwirken, die hierfür z.B. am Rand an geeigneten Stützstellen ein Treibmittel (47) aufweist. Ferner kann die Stabilisierungseinrichtung (15) in oder an dem Stützkörper (27) angeordnet sein. Ein stationärer Stützkörper (27) kann hierfür entsprechend hohl ausgebildet sein. Das Andrückmittel (32) ist bei stationärem Stützkörper (27) und umlaufender Matrize in entsprechender Weise ausgebildet und kann die Roll- oder Umlaufbewegung ermöglichen.

In Variation zu den gezeigten Ausführungsbeispielen kann ein Druckmedium (35) in anderer Weise ausgebildet sein, z.B. als anderes Fluid. Dies kann z.B. eine flüssige oder pastöse Konsistenz haben und z.B. aus einem Gel bestehen.

Weitere Variationen sind hinsichtlich der Stabilisierung des fluidischen Mediums (6) möglich. Eine Stabilisierung, insbesondere Verfestigung oder Aushärtung kann auch auf anderem Wege, z.B. durch Wärmezufuhr, Bestrahlung, elektrische Wechselfelder oder dergleichen erfolgen. Das Stabilierungsmittel (50) ist entsprechend ausgebildet. Auch die Durchlässigkeit des Stützkörpers (27), des Zwischenraums (31) mit dem Andrückmittel (32) und der Matrize (22) ist dann entsprechend abgeändert und angepasst.

### BEZUGSZEICHENLISTE

- 1: Applikationseinrichtung, Auftrageinrichtung
- 2: Applikator, Auftragwerkzeug
- 3: Handhabungseinrichtung
- 4: Werkstück, Verkehrsmittel
- 5: Untergrund, Außenhaut, Karosseriehaut
- 6: Medium, Lack
- 7: Mikrostruktur, Profil
- 8: Auftragbahn
- 9: verfestigter Strukturbereich
- 10: unverfestigter Bereich, Nassbereich
- 11: Erfassungseinrichtung
- 12: Prozessrichtung, Vorschubrichtung
- 13: Gestell
- 14: Auftrageinrichtung für Medium
- 15: Stabilisierungseinrichtung, Aushärteeinrichtung
- 16: Zuführeinrichtung für Medium
- 17: Reinigungseinrichtung
- 18: Anschluss Roboter
- 19: Gehäuse
- 20: Trageinrichtung
- 21: Tragarm, Schwenkarm
- 22: Matrize
- 23: Hülse, Ringbahn
- 24: Außenseite
- 25: Prägeprofil, Gegenprofil
- 26: Andrückbereich
- 27: Stützkörper, Walze
- 28: Mantel
- 29: Sperre, Abdeckung
- 30: Achse
- 31: Zwischenraum
- 32: Andrückmittel
- 33: Druckmittelpolster
- 34: Umhüllung, Schlauch
- 35: Druckmedium, Druckluft
- 36: Hüllenmantel, Schlauchmantel
- 37: Seitenwand
- 38: Steuermittel
- 39: Ventil
- 40: Lagerung
- 41: Stützkonstruktion
- 42: Lagerflansch
- 43: Lager, Ringlager
- 44: Antrieb
- 45: Motor
- 46: Riementrieb
- 47: Treibmittel, Zahnkranz
- 48: Wechseleinrichtung für Matrize
- 49: Lichtquelle, UV-Lampe
- 50: Stabilisierungsmittel, Lichtstrahl
- 51: Energieversorgung
- 52: Entsorgung, Absaugung
- 53: Feuchtemesser, Hygrometer
- 54: Thermometer
- 55: Dosiereinrichtung
- 56: Auftragdüse
- 57: Verteilwalze
- 58: Antrieb
- 59: Entsorgungseinrichtung Medienrückstände
- 60: Absaugung
- 61: Reinigungsmittel für Untergrund
- 62: Bürste
- 63: Entsorgung, Absaugung
- 64: Reinigungsmittel für Matrize
- 65: Bürste
- 66: Entsorgung, Absaugung
- 67: elektrostatische Rolle
- 68: Reinigungsmittel für Medienzuführung
- 69: Belastungssensor, Kraft/Momentensensor
- 70: Sensor, Prüfsensor
- 71: Messeinrichtung, Messkamera, Lasertracker
- 72: Messmarke
- 73: Industrieroboter
- 74: Träger
- 75: Halter
- 76: Haltearm
- 77: Stelleinrichtung
- 78: Tragbalken
- 79: Fördergerät
- 80: Fahrachse, Linearachse
- 81: Düsenhalter
- 82: Sprühkegel
- 83: Abschirmblech

- a: Arbeitsbereich

## Patentansprüche

1. Applikator für den Auftrag und die prägende Mikroprofilierung eines fluidischen Mediums (6) auf einem Untergrund (5) im Non-Aerospace-Bereich, wobei der Applikator (2) eine umlaufend bewegte Matrize (22) mit einem Prägeprofil (25), ein Andrückmittel (32) für die Matrize (22), und eine Stabilisierungseinrichtung (15), insbesondere Aushärteeinrichtung, für das aufgetragene Medium (6) aufweist, wobei der Applikator (2) einen hohlen Stützkörper (27) aufweist, den die Matrize (22) unter Bildung eines Zwischenraums (31) mit Abstand umgibt, wobei das Andrückmittel (32) im Zwischenraum (31) angeordnet ist und wobei der Applikator (2) einen Anschluss (18) für eine Handhabungseinrichtung (3), insbesondere für einen Industrieroboter (73), aufweist und wobei der Applikator (2) einen eigenen Antrieb (44) für die umlaufende Bewegung der Matrize (22) aufweist.

2. Applikator nach Anspruch 1, **dadurch gekennzeichnet, dass** die Stabilisierungseinrichtung (15) in oder an dem Stützkörper (27) angeordnet ist.

3. Applikator Anspruch 1 oder 2, **dadurch gekennzeichnet, dass** der Applikator (2) eine Zuführeinrichtung (16) für das fluidische Medium (6) und ggf. eine Reinigungseinrichtung (17) aufweist.

4. Applikator nach einem der vorhergehenden Ansprüche, **dadurch gekennzeichnet, dass** der Stützkörper (27) rohrförmig ausgebildet ist und einen formstabilen Mantel (28) aufweist, wobei das Andrückmittel (32) von innen und auf die umgebende Matrize (22) eine Andrückkraft ausübt.

5. Applikator nach Anspruch 3 oder 4, **dadurch gekennzeichnet, dass** der Stützkörper (27) an einem Gestell (13) des Applikators (2) drehbar gelagert (43) und mit der Matrize (2) drehschlüssig verbunden ist, wobei der Stützkörper (27) oder die Matrize (2) mit dem Antrieb (44) gekoppelt ist.

6. Applikator nach einem der vorhergehenden Ansprüche, **dadurch gekennzeichnet, dass** das Andrückmittel (32) als verformbares und den Zwischenraum (31) ausfüllendes Druckmittelpolster (33) ausgebildet ist, wobei der Innendruck im Druckmittelpolster (33) signifikant höher als der Umgebungsdruck ist, so dass das Druckmittelpolster (33) von innen eine Andrückkraft gegen die umgebende Matrize (22) entwickelt.

7. Applikator nach einem der vorhergehenden Ansprüche, **dadurch gekennzeichnet, dass** das Druckmittelpolster (33) ein fluidisches Druckmedium (35), insbesondere Druckgas, in einer dichtenden, biegeelastischen Umhüllung (34) aufweist.

8. Applikator nach einem der vorhergehenden Ansprüche, **dadurch gekennzeichnet, dass** die Stabilisierungseinrichtung (15) ein Stabilisierungsmittel (50), insbesondere Licht, emittiert, wobei der Mantel (28) des Stützkörpers (27), das Andrückmittel (32) und die Matrize (22) für das Stabilisierungsmittel (50) durchlässig sind.

9. Applikationseinrichtung für den Auftrag und die prägende Mikroprofilierung eines fluidischen Mediums (6) auf einem Untergrund (5) im Non-Aerospace-Bereich, wobei die Applikationseinrichtung (1) einen Applikator (2) und eine Handhabungseinrichtung (3) für eine Relativbewegung zwischen dem Applikator (2) und einem Werkstück (4) aufweist, **dadurch gekennzeichnet, dass** der Applikator (2) nach mindestens einem der Ansprüche 1 bis 8 ausgebildet ist.

10. Applikationseinrichtung nach Anspruch 9, **dadurch gekennzeichnet, dass** die Handhabungseinrichtung (3) derart ausgebildet und gesteuert ist, dass sie den Applikator (2) entlang des Untergrunds (5) bewegt und ihn dabei mit einer solchen Kraft gegen den Untergrund (5) anpresst, dass die umlaufend bewegte Matrize (22) sich im Andrückbereich (26) verformt, abflacht und flächig an den Untergrund (5) und dessen Kontur anschmiegt.

11. Applikationseinrichtung nach Anspruch 9 oder 10, **dadurch gekennzeichnet, dass** die Handhabungseinrichtung (3) zwei oder mehr am Boden verfahrbare Träger (74) mit jeweils einem omnidirektional verfahrbaren Fördergerät (79) und einem Industrieroboter (73) aufweist, wobei die Industrieroboter (73) einen Tragbalken (78) an beiden Enden halten und ihn in Kooperation gemeinsam sowie in abgestimmten Bewegungen relativ zum Werkstück (4) führen und der Applikator (2) am Tragbalken (78) verfahrbar gelagert und ggf. gesteuert angetrieben ist.

12. Verfahren für den Auftrag und die prägende Mikroprofilierung eines fluidischen Mediums (6) auf einem Untergrund (5) im Non-Aerospace-Bereich mittels eines Applikators (2), der das fluidische Medium (6) mit einer umlaufend bewegten Matrize (22) mit einem Prägeprofil (25) auf dem Untergrund (5) aufträgt, wobei die Matrize (22) von einem Andrückmittel (32) gegen den Untergrund (5) gedrückt wird und wobei das aufgetragene Medium (6) mit einer Stabilisierungseinrichtung (15), insbesondere Aushärteeinrichtung, stabilisiert, insbesondere ausgehärtet wird, wobei der Applikator (2) einen hohlen Stützkörper (27) aufweist, den die Matrize (22) unter Bildung eines Zwischenraums (31) mit Abstand umgibt, wobei das Andrückmittel (32) im Zwischenraum (31) angeordnet ist, wobei der Applikator (2) von einer Handhabungseinrichtung (3), insbesondere einem Industrieroboter (73), entlang des Untergrunds (5) bewegt und dabei mit einer gesteuerten oder geregelten Kraft gegen den Untergrund (5) angepresst wird und wobei die Matrize (22) von einem eigenen Antrieb (44) des Applikators (2) umlaufend bewegt wird.

13. Verfahren nach Anspruch 12, **dadurch gekennzeichnet, dass** das Andrückmittel (32) von innen auf die umgebende Matrize (22) eine steuerbare oder regelbare Andrückkraft ausübt, wobei das Andrückmittel (32) als verformbares und den Zwischenraum (31) ausfüllendes Druckmittelpolster (33) ausgebildet ist, dessen innere Andrückkraft auf die Matrize (22) gesteuert oder geregelt wird.

14. Verfahren nach Anspruch 12 oder 13, **dadurch gekennzeichnet, dass** die umlaufend bewegte Matrize (22) mit dem Prägeprofil (25) das fluidische Medium (6) von einer Zuführeinrichtung (16) aufnimmt und mit der Umlauf- oder Drehbewegung zum Untergrund (5) bewegt und es am Andrückbereich (26) auf den Untergrund (5) überträgt, wobei das Profil (7) durch die Einwirkung der Zustell- oder Andrückkraft geprägt wird.

15. Verfahren nach einem der Ansprüche 12 bis 14, **dadurch gekennzeichnet, dass** der flächige Andrückbereich (26) in seiner Größe, insbesondere in seiner Erstreckung in Prozess- oder Vorschubrichtung, auf das Stabilisierungs- bzw. Aushärteverhalten des Mediums (6) angepasst wird.

## Claims

1. Applicator for the application and the embossing microprofiling of a fluid medium (6) on an underlying surface (5) in the non-aerospace sector, wherein the applicator (2) has a die (22), moved in revolution, with an embossing profile (25), has a contact-pressure means (32) for the die (22), and has a stabilizing device (15), in particular a curing device, for the applied medium (6), wherein the applicator (2) has a hollow supporting body (27) that the die (22) surrounds in a spaced-apart manner, forming an intermediate space (31), wherein the contact-pressure means (32) is arranged in the intermediate space (31) and wherein the applicator (2) has a port (18) for a handling device (3), in particular for an industrial robot (73), and wherein the applicator (2) has a dedicated drive (44) for the revolving movement of the die (22).

2. Applicator according to Claim 1, **characterized in that** the stabilizing device (15) is arranged in or on the stabilizing body (27).

3. Applicator according to Claim 1 or 2, **characterized in that** the applicator (2) has a feed device (16) for the fluid medium (6) and optionally a cleaning device (17).

4. Applicator according to one of the preceding claims, **characterized in that** the supporting body (27) is configured in a tubular manner and has a dimensionally stable shell (28), wherein the contact-pressure means (32) exerts a contact-pressure force on the surrounding die (22) from the inside.

5. Applicator according to Claim 3 or 4, **characterized in that** the supporting body (27) is mounted (43) in a rotatable manner on a frame (13) of the applicator (2) and is connected to the die (2) in a rotationally locked manner, wherein the supporting body (27) or the die (2) is coupled to the drive (44).

6. Applicator according to one of the preceding claims, **characterized in that** the contact-pressure means (32) is configured as a deformable pressure-means cushion (33) that fills the intermediate space (31), wherein the internal pressure in the pressure-means cushion (33) is significantly higher than the ambient pressure, such that the pressure-means cushion (33) develops a contact-pressure force against the surrounding die (22) from the inside.

7. Applicator according to one of the preceding claims, **characterized in that** the pressure-medium cushion (33) has a fluid pressure medium (35), in particular compressed gas, in a sealing, flexurally elastic sheathing (34).

8. Applicator according to one of the preceding claims, **characterized in that** the stabilizing device (15) emits a stabilizing means (50), in particular light, wherein the shell (28) of the supporting body (27), the contact-pressure means (32) and the die (22) are permeable to the stabilizing means (50).

9. Application device for the application and the embossing microprofiling of a fluid medium (6) on an underlying surface (5) in the non-aerospace sector, wherein the application device (1) has an applicator (2) and a handling device (3) for a relative movement between the applicator (2) and a workpiece (4), **characterized in that** the applicator (2) is configured according to at least one of Claims 1 to 8.

10. Application device according to Claim 9, **characterized in that** the handling device (3) is configured and controlled such that it moves the applicator (2) along the underlying surface (5) and in the process presses it against the underlying surface (5) with such a force that the die (22), moved in revolution, is deformed and flattened in the contact-pressure area (26) and closely hugs the underlying surface (5) and the contour thereof.

11. Application device according to Claim 9 or 10, **characterized in that** the handling device (3) has two or more carriers (74) that are movable on the ground and each have an omnidirectionally movable conveyor (79) and an industrial robot (73), wherein the industrial robots (73) hold a girder (78) at its two ends and jointly guide the latter in cooperation and using coordinated movements relative to the workpiece (4), and the applicator (2) is mounted on the girder (78) in a movable manner and optionally driven in a controlled manner.

12. Method for the application and the embossing microprofiling of a fluid medium (6) on an underlying surface (5) in the non-aerospace sector by means of an applicator (2) that applies the fluid medium (6) to the underlying surface (5) with a die (22), moved in revolution, with an embossing profile (25), wherein the die (22) is pressed against the underlying surface (5) by a contact-pressure means (32) and wherein the applied medium (6) is stabilized, in particular cured, with a stabilizing device (15), in particular a curing device, wherein the applicator (2) has a hollow supporting body (27) that the die (22) surrounds in a spaced-apart manner, forming an intermediate space (31), wherein the contact-pressure means (32) is arranged in the intermediate space (31), wherein the applicator (2) is moved along the underlying surface (5) by a handling device (3), in particular an industrial robot (73), and in the process is pressed against the underlying surface (5) with a controlled or regulated force, and wherein the die (22) is moved in revolution by a dedicated drive (44) of the applicator (2).

13. Method according to Claim 12, **characterized in that** the contact-pressure means (32) exerts a controllable or regulatable contact-pressure force on the surrounding die (22) from the inside, wherein the contact-pressure means (32) is configured as a deformable pressure-medium cushion (33) that fills the intermediate space (31), the internal contact-pressure force of said pressure-medium cushion on the die (22) being controlled or regulated.

14. Method according to Claim 12 or 13, **characterized in that** the die (22), moved in revolution, with the embossing profile (25) receives the fluid medium (6) from a feed device (16) and moves to the underlying surface (5) by way of the revolving or rotary movement and transfers it to the underlying surface (5) in the contact-pressure area (26), wherein the profile (7) is embossed by the action of the infeed or contact-pressure force.

15. Method according to one of Claims 12 to 14, **characterized in that** the extensive contact-pressure area (26) is adapted in terms of its size, in particular in terms of its extent in the processing or advancing direction, to the stabilizing or curing behaviour of the medium (6).

## Revendications

1. Applicateur pour l'application et le micro-profilage par gaufrage d'un milieu fluidique (6) sur un subjectile (5) dans un domaine autre que celui de l'aérospatiale, l'applicateur (2) présentant une matrice (22) déplacée en rotation dotée d'un profil de gaufrage (25), un moyen de pressage (32) pour la matrice (22) et un dispositif de stabilisation (15), en particulier un dispositif de durcissement pour le milieu appliqué (6), l'applicateur (2) présentant un corps de support creux (27) entouré avec espacement par la matrice (22) en formant un espace intermédiaire (31), le moyen de pressage (32) étant disposé dans l'espace intermédiaire (31), et l'applicateur (2) présentant un raccord (18) pour un dispositif de manipulation (3), en particulier pour un robot industriel (73), et l'applicateur (2) présentant un entraînement propre (44) pour le mouvement de rotation de la matrice (22).

2. Applicateur selon la revendication 1, **caractérisé en ce que** le dispositif de stabilisation (15) est disposé dans ou sur le corps de support (27).

3. Applicateur selon la revendication 1 ou 2, **caractérisé en ce que** l'applicateur (2) présente un dispositif d'acheminement (16) pour le milieu fluidique (6) et éventuellement un dispositif de nettoyage (17).

4. Applicateur selon l'une quelconque des revendications précédentes, **caractérisé en ce que** le corps de support (27) est réalisé sous forme tubulaire et présente une enveloppe (28) de forme stable, le moyen de pressage (32) exerçant une force de pressage depuis l'intérieur et sur la matrice environnante (22).

5. Applicateur selon la revendication 3 ou 4, **caractérisé en ce que** le corps de support (27) est supporté de manière rotative (43) sur un bâti (13) de l'applicateur (2) et est connecté de manière solidaire en rotation à la matrice (2), le corps de support (27) ou la matrice (2) étant accouplé(e) à l'entraînement (44) .

6. Applicateur selon l'une quelconque des revendications précédentes, **caractérisé en ce que** le moyen de pressage (32) est réalisé sous forme de coussin de milieu sous pression (33) déformable et remplissant l'espace intermédiaire (31), la pression interne dans le coussin de milieu sous pression (33) étant considérablement plus élevée que la pression ambiante, de telle sorte que le coussin de milieu sous pression (33) exerce depuis l'intérieur une force de pressage contre la matrice environnante (22).

7. Applicateur selon l'une quelconque des revendications précédentes, **caractérisé en ce que** le coussin de milieu sous pression (33) présente un milieu sous pression fluidique (35), en particulier un gaz sous pression dans une enveloppe (34) hermétique élastiquement flexible.

8. Applicateur selon l'une quelconque des revendications précédentes, **caractérisé en ce que** le dispositif de stabilisation (15) émet un agent de stabilisation (50), en particulier de la lumière, l'enveloppe (28) du corps de support (27), le moyen de pressage (32) et la matrice (22) étant perméables à l'agent de stabilisation (50).

9. Dispositif d'application pour l'application et le micro-profilage par gaufrage d'un milieu fluidique (6) sur un subjectile (5) dans un domaine autre que celui de l'aérospatiale, le dispositif d'application (1) présentant un applicateur (2) et un dispositif de manipulation (3) pour un mouvement relatif entre l'applicateur (2) et une pièce (4), **caractérisé en ce que** l'applicateur (2) est réalisé selon au moins l'une des revendications 1 à 8.

10. Dispositif d'application selon la revendication 9, **caractérisé en ce que** le dispositif de manipulation (3) est réalisé et commandé de telle sorte qu'il déplace l'applicateur (2) le long du subjectile (5) et le presse à cet effet contre le subjectile (5) avec une force telle que la matrice (22) déplacée en rotation se déforme dans la région de pressage (26), s'aplatit et s'adapte de manière plane au subjectile (5) et à son contour.

11. Dispositif d'application selon la revendication 9 ou 10, **caractérisé en ce que** le dispositif de manipulation (3) présente deux ou plus de deux supports (74) déplaçables sur le fond et dotés respectivement d'un appareil de transport (79) déplaçable de manière omnidirectionnelle et d'un robot industriel (73), les robots industriels (73) retenant à leurs deux extrémités une poutre porteuse (78) et guidant celle-ci conjointement en coopération ainsi que suivant des mouvements adaptés par rapport à la pièce (4) et l'applicateur (2) étant monté de manière déplaçable sur la poutre porteuse (78) et éventuellement entraîné de manière commandée.

12. Procédé d'application et de micro-profilage par gaufrage d'un milieu fluidique (6) sur un subjectile (5) dans un domaine autre que celui de l'aérospatiale au moyen d'un applicateur (2) qui applique le milieu fluidique (6) sur le subjectile (5) au moyen d'une matrice (22) déplacée en rotation dotée d'un profil de gaufrage (25), la matrice (22) étant pressée contre le subjectile (5) par un moyen de pressage (32) et le milieu appliqué (6) étant stabilisé, en particulier durci, à l'aide d'un dispositif de stabilisation (15), en particulier d'un dispositif de durcissement, l'applicateur (2) présentant un corps de support creux (27) entouré avec espacement par la matrice (22) en formant un espace intermédiaire (31), le moyen de pressage (32) étant disposé dans l'espace intermédiaire (31), l'applicateur (2) étant déplacé le long du subjectile (5) par un dispositif de manipulation (3), en particulier un robot industriel (73), et étant à cet effet pressé contre le subjectile (5) avec une force commandée ou régulée, et la matrice (22) étant entraînée en rotation par un entraînement propre (44) de l'applicateur (2).

13. Procédé selon la revendication 12, **caractérisé en ce que** le moyen de pressage (32) exerce depuis l'intérieur sur la matrice environnante (22) une force de pressage pouvant être commandée ou pouvant être régulée, le moyen de pressage (32) étant réalisé sous forme de coussin de milieu sous pression (33) déformable et remplissant l'espace intermédiaire (31), coussin dont la force de pressage interne sur la matrice (22) est commandée ou régulée.

14. Procédé selon la revendication 12 ou 13, **caractérisé en ce que** la matrice (22) déplacée en rotation dotée du profil de gaufrage (25) reçoit le milieu fluidique (6) à partir d'un dispositif d'acheminement (16), le déplace par rapport au subjectile (5) suivant le mouvement de circulation ou de rotation et le transmet au subjectile (5) au niveau de la région de pressage (26), le profil (7) étant gaufré sous l'effet de la force d'avance ou de pressage.

15. Procédé selon l'une des revendications 12 à 14, **caractérisé en ce que** la région de pressage plane (26) est adaptée de par sa taille, en particulier de par son étendue dans la direction de traitement ou d'avance, au comportement de stabilisation ou de durcissement du milieu (6).
